Europäisches Patentamt

European Patent Office

Office européen des brevets

(19)

(11) Numéro de publication : **0 601 917 A1**

(12) **DEMANDE DE BREVET EUROPEEN**

(21) Numéro de dépôt : 93402924.0

(22) Date de dépôt : 02.12.93

(51) Int. Cl.$^5$ : **G06F 15/403**

(30) Priorité : 03.12.92 FR 9214584

(43) Date de publication de la demande :
15.06.94 Bulletin 94/24

(84) Etats contractants désignés :
BE CH DE ES FR GB IT LI NL SE

(71) Demandeur : **ALCATEL ALSTHOM
COMPAGNIE GENERALE D'ELECTRICITE
54, rue La Boétie
F-75008 Paris (FR)**

(72) Inventeur : **Lacquit, Hubert
83, Rue Du 11 Novembre 1918
F-94700 Maisons-Alfort (FR)**
Inventeur : **Damier, Christophe
1, Rue des Coquelicots
F-91600 Savigny-sur-Orge (FR)**

(74) Mandataire : **Laroche, Danièle et al
c/o SOSPI
14-16 rue de la Baume
F-75008 Paris (FR)**

(54) **Système d'information multimédia.**

(57)    Un système d'information multimédia (1) pour la gestion de données hétérogènes ayant des structures différentes et réparties sur des gérants spécialisés (2,3,4) de telles données, dans lequel lesdites données sont représentées par un modèle de données orienté objet comprenant une première classe décrivant des propriétés communes à l'ensemble des objets manipulés par le système d'information, caractérisé en ce que ledit modèle orienté objet comprend en outre une seconde classe décrivant des propriétés relatives à l'exploitation des fonctionnalités des gérants de telles données et en ce que ladite première classe comporte une propriété qui référence au moins une instance de ladite seconde classe.

FIG. 1

L'invention se rapporte à un système d'information multimédia pour la gestion de données hétérogènes ayant des structures différentes et réparties sur des gérants spécialisés de telles données, dans lequel lesdites données sont représentées par un modèle de données orienté objet comprenant une première classe décrivant des propriétés communes à l'ensemble des objets manipulés par le système d'information.

Les systèmes d'information multimédia sont des systèmes qui permettent d'accéder à et de manipuler des données hétérogènes, par exemple des informations alphanumériques, des textes, des données structurées, des images numérisées, des séquences vidéo ou autre.

Ces données hétérogènes sont actuellement gérées par des systèmes spécialisés appelés par la suite gérants de données.

De nombreux gérants de données sont disponibles sur le marché, allant des composants matériels spécialisés (vidéo disque, disque optique numérique, ...) aux logiciels plus ou moins généraux (système de gestion de base de données relationnelle, système d'information géographique, système de gestion documentaire, ...).

Un système d'information multimédia est connu du document EP 459683. Ce système d'information présente les inconvénients suivants.

Les données gérées par ce système d'information ne proviennent que de systèmes de gestion de bases de données relationnelles. L'exploitation de données provenant d'autres types de gérants de données tels que ceux indiqués précédemment soulève des problèmes relatifs à l'accès et à la manipulation de ces données. Ainsi, pour exploiter les fonctionnalités d'un gérant de données particulier, tel qu'un vidéo disque ou un système d'information géographique, il est nécessaire d'intégrer ces fonctionnalités au niveau de chacune des classes décrivant les données de ce gérant.

L'objet de l'invention est de remédier à cet inconvénient. En particulier, un objectif de l'invention est de proposer un système d'information multimédia capable de prendre en compte la diversité des types de données manipulées par des gérants de données hétérogènes et de présenter, à un utilisateur, une vision globale et intégrée de l'ensemble des données.

Un tel système d'information trouve des applications nombreuses dans le domaine de la bureautique par exemple.

A cet effet l'invention a pour objet un système d'information multimédia tel que défini précédemment, caractérisé en ce que ledit modèle orienté objet comprend en outre une seconde classe décrivant des propriétés relatives à l'exploitation des fonctionnalités des gérants de telles données et en ce que ladite première classe comporte une propriété qui référence au moins une instance de ladite seconde classe

Les gérants de données étant accédés au travers d'un même modèle de données orienté objet, le problème posé par la distribution des données peut être facilement résolu par des techniques analogues à celles connues pour la gestion de bases de données réparties.

Ce système d'information répond au problème posé par l'intégration de gérants hétérogènes grâce au fait qu'il possède une représentation de chaque gérant intégré. Cette représentation supporte la description des fonctionnalités attachées à chaque gérant et est exploitée par le système d'information pour accéder aux données de chaque gérant au travers de la propriété reliant ladite première classe (classe "Class") à ladite seconde classe (classe "Datamanager").

L'invention est décrite en détail ci-après en référence aux dessins.

- La figure 1 représente schématiquement l'architecture d'un système d'information multimédia selon l'invention.
- La figure 2 représente schématiquement la structure du modèle orienté objet exploité par le système d'information multimédia de la figure 1.

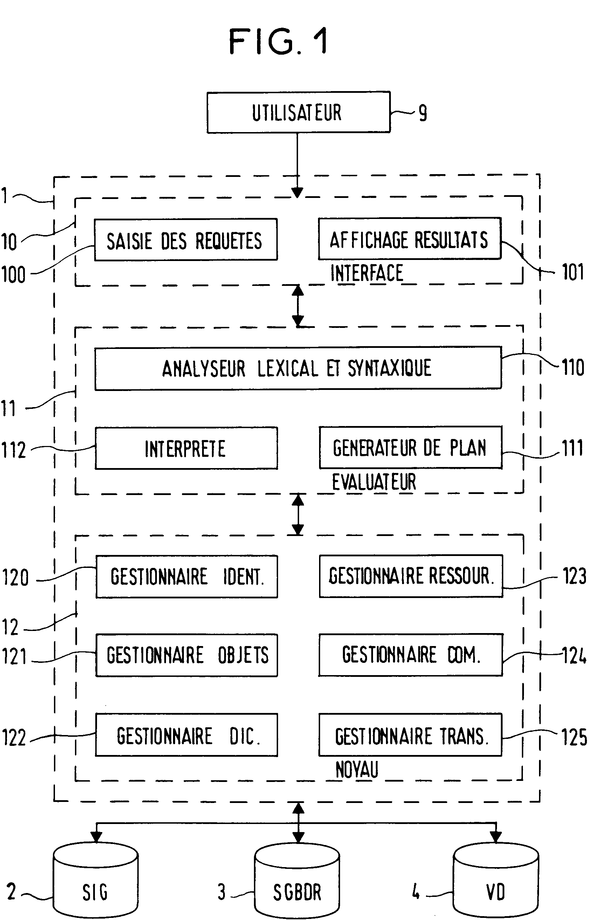

Sur la figure 1, le système d'information multimédia 1 est constitué d'une première couche logicielle interface 10, d'une seconde couche logicielle évaluateur 11 et d'une troisième couche logicielle noyau 12. Dans l'exemple de réalisation présenté, ces différentes couches logicielles sont implémentées en C++. Il est entendu qu'elles peuvent être aussi implémentées dans un autre langage de programmation orienté objet. Ces couches logicielles forment un programme susceptible d'être chargé dans un ordinateur muni d'un système d'exploitation adapté pour l'exécution d'un programme en langage orienté objet. L'ordinateur est de préférence une station de travail équipée d'un écran graphique supportant l'affichage d'images et de textes alphanumériques.

Un utilisateur 9 qui peut être un opérateur humain, ou une application, interagit avec le système d'information 1 par l'intermédiaire de la couche interface 10. La couche interface 10 comprend un module 100 agencé pour saisir des requêtes ou commandes, et un module 101 agencé pour afficher des résultats en réponse auxdites requêtes ou commandes. De préférence, une telle couche interface 10 est agencée pour permettre le développement et/ou l'adaptation de modules logiciels dans le système d'information 1 par l'intermédiaire d'utilitaires de développement de programmes classiques en soi.

La couche interface 10 interagit avec la couche évaluateur 11. La couche évaluateur 11 comprend un analyseur lexical et syntaxique 110 qui décompose chaque requête ou commande saisie par la couche interface 10 en éléments identifiables de la grammaire d'un langage propre au système d'information 1 pour produire un arbre syntaxique représentant la requête ou la commande. Elle comprend aussi un générateur de plan 111 qui traduit l'arbre syntaxique en arbre d'exécution et un interprète 112 qui actionne la couche noyau 12 pour chaque feuille de l'arbre d'exécution.

La couche noyau 12 gère les objets manipulés par le système d'information 1 et interagit, par l'intermédiaire d'un réseau 5 tel qu'un réseau local ou un réseau grande distance et d'interfaces adaptées, avec des gérants de données spécialisés, tels qu'un système d'information géographique (SIG) 2, un gestionnaire d'images 4 comme un lecteur de disques vidéo (VD). La couche noyau 12 interagit également avec un gérant de données particulier qui est un système de gestion d'une base de données relationnelle (SGBDR) 3 comme le système "ORACLE" dont la fonction est décrite plus loin. Dans le système d'information 1, les données des gérants 2,3,4 sont des objets d'un modèle de données orienté objet.

La couche noyau 12 comprend un module 120 de gestion des identificateurs externes des objets, un module 121 de gestion des objets en mémoire, un module 122 de gestion d'un dictionnaire, un module 123 de gestion de ressources logicielles, un module 124 de gestion de la communication avec les gérants de données, un module de gestion des transactions 125. Les fonctionnalités de ces modules sont décrites plus loin.

Le modèle de données orienté objet exploité par le système d'information multimédia 1 selon l'invention, dans le cas présent un modèle méta-circulaire, est maintenant décrit.

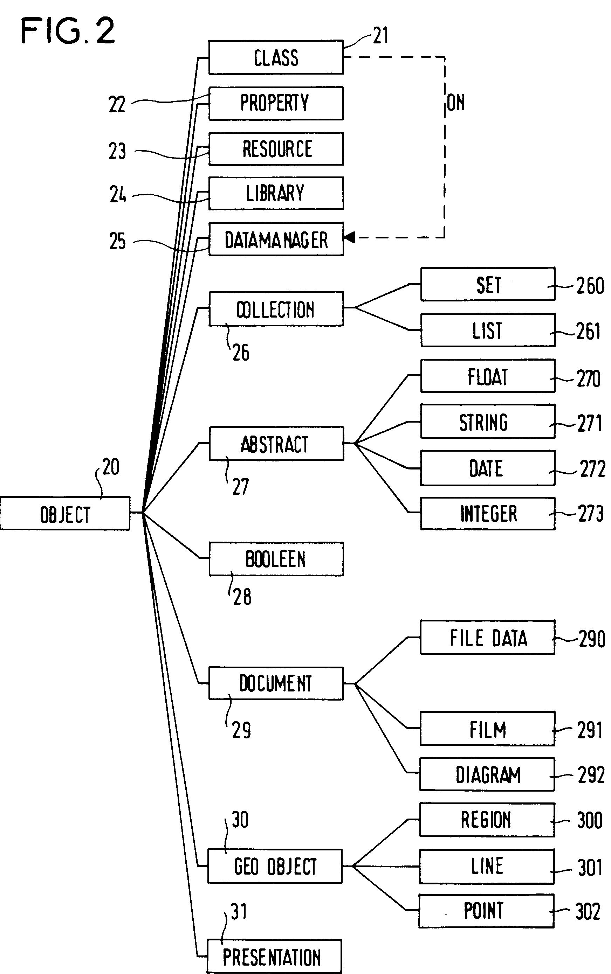

Ce modèle orienté objet est constitué de classes d'objet organisées hiérarchiquement comme visible sur la figure 2, l'ordre hiérarchique de dépendance des classes allant de la gauche vers la droite sur la figure.

Un objet est classiquement une instance de classe. La classe par ses propriétés décrit la structure de l'objet. Il est entendu qu'une classe dépendante hérite des propriétés de la classe dont elle dépend.

La classe "Objet" 20 décrit et regroupe les propriétés communes à l'ensemble des objets manipulés par le système d'information 1. Elle comporte les propriétés suivantes:

. Name: permettant d'accéder à l'identificateur externe de l'objet,

. Display: permettant d'activer une interface graphique de l'objet,

. ?: permettant d'afficher sous une forme alphanumérique des valeurs associées aux propriétés d'un objet,

. =et!=: permettant de comparer deux objets,

. Set: permettant de mettre à jour l'état d'un objet,

. Persist: permettant de rendre persistant un objet temporaire,

. Types: Permettant d'obtenir l'ensemble des classes dont l'objet est une instance,

. Delete: permettant de supprimer un objet.

La classe "Class" 21 qui dépend de la classe 20 décrit l'ensemble des classes du modèle orienté objet et regroupe les propriétés suivantes:

. New: permettant la création d'une instance,

. On: indiquant le gérant de données qui assure la persistance des instances,

. Schema: permettant d'obtenir la liste des propriétés locales des instances,

. General: permettant d'obtenir la liste de toutes les propriétés locales et héritées,

. Fathers: permettant d'obtenir l'ensemble des classes dont elle hérite,

. Presentation: permettant de déterminer la présentation graphique des instances,

. Instances: permettant d'obtenir l'ensemble des instances en mémoire,

. Insert: permettant de créer et sauvegarder une nouvelle instance persistante,

. Read: permettant de lire des propriétés attachées à une instance persistante,

. Write: permettant de mettre à jour des valeurs associées à une instance persistante,

. Remove: permettant de détruire une instance de classe.

Les propriétés qui permettent de gérer les associations entre objets sont aussi définies par une classe "Property" 22 qui possède les propriétés suivantes:

. Selector: indiquant le nom de la propriété,

. Range: donnant la classe de l'information associée à cette propriété,

. Default: indiquant la valeur retournée par défaut,

. Read: indiquant le mode d'accès en lecture associé à cette propriété,

. Write: indiquant le mode d'accès en écriture associé à cette propriété,

. Inverse: donnant la propriété exécutant un traitement inverse.

Les propriétés Read et Write définissent le mode d'accès à la propriété. Il suffit pour cela d'affecter, pour définir un comportement en lecture et respectivement en écriture, la propriété Read et respectivement la propriété Write, à une instance de la classe "Ressource" définie ci-dessous. Par ce biais, des méthodes sont attachées à chaque classe. Des ressources sont prédéfinies, telles que "Std" par exemple pour rendre l'accès en lecture ou en écriture standard, c'est-à-dire sans exploiter une méthode particulière.

Le modèle orienté objet comprend donc une classe "Ressource" 23 qui décrit les ressources logicielles associées à l'ensemble des propriétés. Comme cela est décrit par la suite, une ressource logicielle est un programme opérant sur un objet et appelé par l'intermédiaire d'une propriété de cet objet. Cette classe possède les propriétés suivantes:

. Selector: indiquant le nom de la ressource,
. Range: donnant le type de résultat de cette ressource,
. Default: indiquant la valeur retournée par défaut,
. Parameters: donnant la liste des types des paramètres passés à la ressource logicielle lors de son appel,
. Library: indiquant la librairie qui contient le code exécutable de la ressource,
. Mode: indiquant le langage de programmation de la ressource,
. Body: indiquant un point d'entrée vers le code exécutable de la ressource logicielle.

Le modèle comprend aussi la classe "Library" 24 qui décrit les différentes librairies exploitées par le système d'information 1 et comporte la propriété Path indiquant le chemin d'accès pour atteindre une librairie donnée dans le système de gestion de fichiers du système d'exploitation utilisé.

Le modèle comprend encore la classe "Datamanager" 25 qui modélise un gérant de données en définissant les propriétés liées à la gestion des transactions et les propriétés liées à la manipulation des données supportées par le gérant. Cette classe comporte donc des premières propriétés qui sont:

. Open: pour ouvrir une transaction pour le gérant de données concerné,
. Close: pour fermer la transaction sur le gérant de données,
. Rollback: pour annuler la transaction en cours,
. Commit: pour valider la transaction en cours,

Elle comporte des secondes propriétés qui sont:

. Insert: pour créer une instance d'une classe dont le gérant de données à la charge,
. Read: pour lire des informations attachées à un tel objet,
. Write: pour mettre à jour des informations attachées à un tel objet,
. Remove: pour détruire un tel objet.

Le modèle de données orienté objet comprend une classe "Collection" 26 qui décrit une collection d'objet. Cette classe comprend les propriété suivantes:

. Cardinal: indiquant le nombre d'élément de la collection,
. Add: permettant d'ajouter un élément à la collection,
. Remove: permettant de supprimer un élément de la collection,
. Union et intersection: définissant les opérateurs standards d'union et d'intersection de collections d'objet,
. Belongs: définissant le prédicat d'appartenance,
. Of?: déterminant la plus petite classe commune aux éléments d'une collection,
. Of: contraignant le type d'élément de la collection à être une sous-classe d'une classe donnée.

La classe 26 est spécialisée par les classes "Set" 260 (collection non ordonnée d'objets non répétés) et "List" 261 (collection ordonnée d'objets éventuellement répétés).

Les types d'objet de base sont décrits par la classe "Abstract" 27 qui est spécialisée par les classes "Float" 270 (qui regroupe les nombres réels positifs ou négatifs), "String" 271 (qui regroupe les chaînes de caractères), "Date" 272 (qui regroupe les dates), "Integer" 273 (qui regroupe les nombres entiers positifs ou négatifs).

La classe "Boolean" 28 ne possède que deux instances qui sont "Vrai" et "Faux".

La classe "Document" 29 regroupe les classes spécialisées dans le traitement des données gérées par le gestionnaire d'images 4. Elle comprend les propriétés suivantes:

. Title: indiquant le titre du document,
. Keywords: regroupant un ensemble de chaînes de caractères permettant un accès sélectif au document en fonction de mots clés,
. Abstract: permettant d'obtenir une description sommaire du document,
. Source: donnant les informations sur la provenance du document.

La classe 29 est spécialisée par les classes "File_data" 290 (données multimédia sous forme de fichiers), "Film" 291 (données multimédia sous forme de séquences vidéo), "Diagram" 292 (données multimédia sous forme de schémas).

la classe "Geo_objet" 30 regroupe les classes spécialisées dans le traitement de données gérées par le système d'information géographique 2.

La classe 30 est spécialisée par les classes "Region" 300 pour la modélisation de surfaces, "Line" 301 pour la modélisation de lignes, "Point" 302 pour la modélisation de points.

Enfin, l'interface graphique d'affichage d'un objet quelconque est défini par la classe "Presentation" 31 qui possède les propriétés suivantes:

. Open: pour créer une présentation graphique et enregistrer le lien entre cette présentation graphique et l'objet,

. Close: pour détruire une présentation graphique et le lien entre cette présentation graphique et l'objet,

. Expose: pour définir des paramètres d'affichage,

. Editable: pour indiquer qu'un objet est modifiable au travers de l'exploitation de son interface graphique.

Le langage de commande exploité par le système d'information multimédia 1 est agencé pour permettre principalement trois types de commande:

- la déclaration de classes et des propriétés,
- la création, la suppression et la mise à jour des classes,
- la manipulation d'objets par l'intermédiaire d'un langage de requête.

Un exemple de déclaration d'une classe et de propriétés décrivant des données manipulées par le gérant 2 est illustré sur la table 4.

Sur cette table, "carte-echelle", "carte-theme", "carte-bitmap", "carte-composante" sont des propriétés dont les modes d'accès en lecture et en écriture sont standards (la ressource std). Ces propriétés sont donc des attributs. Par contre, la lecture de la propriété "carte-display" active une ressource logicielle qui s'exécute par l'intermédiaire de la fonction Cdisplay. Cdisplay est un objet de la classe 23.

Le langage de requête est agencé de manière à ce que l'utilisateur 9 puisse manipuler l'ensemble des données à partir des concepts du modèle de données orienté objet (classes, objets, propriétés et héritage). De ce fait, trois types de requêtes sont différenciées, à savoir les requêtes élémentaires, les requêtes transactionnelles, les requêtes d'interrogation.

Les requêtes élémentaires concernent les manipulations simples d'objet ou l'appel de ressources logicielles. Elles consistent à lire une propriété d'un objet. Elles correspondent notamment aux commandes "Insert, Update, Delete" de la norme SQL. La table 1 présente la syntaxe d'une requête élémentaire, où <type> désigne un identificateur externe d'une classe, <objet> désigne une valeur immédiate ou un identificateur d'objet, <sélecteur> désigne un sélecteur de propriété et le symbole ":" désigne l'opérateur de typage.

Une requête élémentaire peut être utilisée par exemple pour détruire un objet (propriété "Delete" de la classe 20), créer une instance de classe (propriété "New" de la classe 21), rendre persistant un objet (propriété "Persist" de la classe 20), etc....

Les requêtes transactionnelles consistent à valider ou annuler une transaction en cours avec un gérant de données. La syntaxe de deux requêtes transactionnelles est donnée à la table 2.

Les requêtes d'interrogation concernent l'accès aux données des gérants de données. La syntaxe des requêtes d'interrogation est proche de la syntaxe SQL (voir table 3).

Les fonctionnalités des modules de la couche noyau 12 sont maintenant décrites.

Le module 120 de gestion des identificateurs externes des objets exploite une table de hachage (cache des symboles) qui établit une correspondance entre des identificateurs externes d'objet (Eid) exploités par l'utilisateur et des identificateurs internes d'objet (Pid) exploités par la couche noyau. La persistance des correspondances entre identificateurs externes et identificateurs internes est gérée par le système de gestion de base de données relationnelle 3. Ce module a pour rôle de récupérer un identificateur interne à partir d'un identificateur externe d'objet.

Le module 121 de gestion des objets en mémoire exploite aussi une table de hachage (cache des objets) qui établit une correspondance entre les identificateurs internes d'objet (Pid) et les caractéristiques (propriétés) de ces objets. La persistance des correspondances entre identificateurs internes d'objet et caractéristiques des objets est gérée aussi par le gérant 3. Ce module a pour rôle de récupérer la représentation interne associée à chaque objet à partir de l'identificateur interne de l'objet.

Le module 122 de gestion d'un dictionnaire a pour rôle de calculer la propriété discriminante d'un objet, de calculer les relations d'héritage, de déterminer le mode de lecture ou d'écriture d'une propriété en exploitant un graphe d'héritage et un dictionnaire établissant une correspondance entre des constantes identifiant les propriétés des classes et les valeurs des propriétés de chaque objet.

Le module 123 de gestion de ressources logicielles exploite un éditeur dynamique de liens du système d'exploitation, par exemple le système d'exploitation "SunOs 4.1". Comme présenté plus haut, deux ressources logicielles "Read" et "Write" (classe 22) peuvent être associées à chaque propriété et sont activées sélectivement lors de la lecture ou de l'écriture d'une propriété. L'activation d'une ressource logicielle entraîne, lors du premier appel, une édition dynamique des liens permettant l'exécution du code associé à la ressource contenu dans une librairie.

Le module 124 de gestion de la communication avec les gérants de données exploite quatre ressources logicielles:

- une ressource "Read" permettant de récupérer les valeurs associées à l'ensemble des propriétés d'une instance de classe,

- une ressource "Write" permettant de mettre à jour ces valeurs,
- une ressource "Insert" permettant de sauvegarder une nouvelle instance de classe et les valeurs de ses propriétés,
- une ressource "Remove" permettant de supprimer une instance de classe et les valeurs de ses propriétés.

Ces différentes ressources peuvent être attachées à un gérant de données comme décrit plus haut. Une opération requérant la récupération d'un objet depuis un gérant de données entraîne l'activation de la ressource "Read". Une opération créant un nouvel objet ou modifiant les caractéristiques d'un objet déjà récupéré entraîne l'activation des ressources "Write", "Insert", "Remove" pour la mise à jour dans un gérant de données.

Le module de gestion des transactions 125 a pour rôle de gérer l'ouverture, la fermeture, la validation et l'annulation d'une transaction entre le système d'information 1 et un ou plusieurs gérants de données en exploitant les propriétés des instances de la classe "Datamanager" 25.

La fédération d'un gérant de données au sein du système d'information multimédia 1 s'opère de la façon suivante.

Le gérant de données, par exemple le système d'information géographique SIG 2, est modélisé par la création d'une nouvelle instance de la classe "Datamanager" 25 comme illustré sur la table 5. Pour les propriétés Open, Close, Commit, Rollback, Insert, Read, Write, Remove, une ressource logicielle instance de la classe "Ressource" 23 est développée en langage C++ qui permet la mise en oeuvre de l'opération concernée. Ces ressources logicielles sont stockées dans une librairie exploitée pour l'édition dynamique des liens appelée dans l'exemple LibSIG. Cette librairie regroupe dans l'exemple l'ensemble du code associé aux ressources logicielles supportant les échanges entre le système d'information 1 et le gérant 2. Deux exemples de création de ressources sont montrés sur la table 6, par exemple les ressources "sig-open" et "sig-close" réalisant respectivement l'ouverture et la fermeture des transactions avec ce gérant. Dans ces exemples, "Body" précise le point d'entrée, dans la librairie LibSIG, du code de chaque ressource. "Parameters" donne la liste des types des arguments passée à chacune de ces ressources. Dans le cas présent, cette liste est vide pour les deux ressources. "Mode" indique le langage utilisé pour l'écriture de ces ressources, dans le cas présent C++.

Ensuite les données manipulées par le gérant 4 sont représentées par des instances des différentes classes associées par la propriété "On" de la classe "Class" 21 à l'instance de la classe "Datamanager" décrivant le gérant 4. Sur la table 4, la première commande définit une nouvelle classe "Carte" dont les instances persistent dans le gérant 2 SIG. Cette classe possède en plus des propriétés communes à l'ensemble des classes, les propriétés suivantes:

. "carte-echelle" qui donne l'échelle de la carte (une instance de la classe 270),
. "carte-theme" qui décrit brièvement la nature de la carte (une instance de la classe 271),
. "carte-bitmap" qui référence une image numérisée (une instance de la classe 290),
. "carte-composante" qui référence un ensemble d'éléments constituant une carte ( des instances de la classe 30, plus précisément des classes 300,301,302).
. "carte-display" qui indique comment afficher la carte.

Le fonctionnement du système d'information 1 est le suivant.

- Saisie d'une requête ou commande par le module 100 de la couche interface 10 contenant au moins un identificateur d'un type d'objet, un identificateur d'objet et un identificateur d'une propriété à lire.
- Evaluation de la requête ou commande par les modules 110 à 112 de couche évaluateur 11 pour engendrer un arbre d'exécution.
- Exécution de la requête ou commande par les modules 120 à 125 de la couche noyau 12 à partir de l'arbre d'exécution pour récupérer les identificateurs internes du type d'objet, objet, propriété; recherche par le système d'information de la valeur associée à la propriété "On" du type d'objet pour récupérer l'objet décrivant le gérant de données impliqué dans la requête ou dans la commande, par exemple par une commande du type [On <type d'objet>]; récupération des ressources logicielles d'accès et de manipulations de cet objet vers et par le gérant considéré; activation des ressources logicielles.
- Affichage des résultats par le module 101 de la couche interface 10,
- Attente d'une nouvelle requête ou commande par le module 100 de la couche interface 10.

Un tel système d'information multimédia permet un accès à un grand volume de données hétérogènes réparties dans des serveurs spécialisés déjà existants. Grâce à un tel système d'information, l'opérateur n'a pas à se soucier des formats de données spécifiques à chaque gérant particulier de données, ni même des fonctionnalités offertes par chaque gérant. La fédération d'un nouveau gérant de données au sein du système d'information est relativement simple et ne remet pas en cause l'application éventuelle exploitant le système d'information.

## TABLE 1

```
<req_élém>      ::=  <objet>
                |    <type> : <objet>
                |    [<sélecteur> <req_élém>*]
                |    <type> : [<sélecteur> <req_élém>*]


<type>          ::=  string
<objet>         ::=  string | integer | float | boolean | date
<sélecteur>     ::=  string | [<sélecteur> <req_élém>*]
```

## TABLE 2

```
<validation>   ::=  [ commit ]
<annulation>   ::=  [ rollback ]
```

## TABLE 3

```
<req_sql>        ::=  select <select_list> from <from_list>
                     { where <condition> }

<select_list>  ::=  { <select_item> , }* <select_item>
<select_item>  ::=  <req_elem>
                |   <var>
                |   <var> . <sélecteur>

<from_list>    ::=  { <from_item> , }* <from_item>
<from_item>    ::=  <collection> <var>
<condition>    ::=  [ <sélecteur> <condition_item>* ]
<condition_item> ::=    <var> . <sélecteur>
                |       <req_elem>
                |       <condition>

<sélecteur>    ::=  string
                |   [<sélecteur> <req_élém>*]
                |   [ <sélecteur> <condition_item>* ]

<collection>   ::=  string
<var>          ::=  string
```

TABLE 4

[New Class Carte On SIG]

```
[Add [Schema Carte]
     [New Property carte-echelle
      Range            float
      Read             std
      Write            std]
     [New Property carte-theme
      Range            string
      Read             std
      Write            std]
     [New Property carte-bitmap
      Range            Image
      Read             std
      Write            std]
     [New Property carte-composante
      Range            Set
      Read             std
      Write            std]
     [New Property carte-display
      Range            Void
      Read             CDisplay
      Write            std]]
```

TABLE 5

```
[New Datamanager SIG
        Open         sig-open
        Close        sig-close]
```

TABLE 6

```
[New Resource sig-open
        Library          LibSIG
        Body             "Open"
        Mode         "C++"
        Parameters   ()]

[New Resource sig-close
        Library          LibSIG
        Body             "Close"
        Mode         "C++"
        Parameters   ()]
```

**Revendications**

1. ) Un système d'information multimédia pour la gestion de données hétérogènes ayant des structures différentes et réparties sur des gérants spécialisés de telles données, dans lequel lesdites données sont représentées par un modèle de données orienté objet comprenant une première classe (21) décrivant des propriétés communes à l'ensemble des objets manipulés par le système d'information, **caractérisé** en ce que ledit modèle orienté objet comprend en outre une seconde classe (23) décrivant des propriétés relatives à l'exploitation des fonctionnalités des gérants de telles données (2,4) et en ce que ladite première classe comporte une propriété qui référence au moins une instance de ladite seconde classe.

2. ) Le système d'information multimédia selon la revendication 1, dans lequel ladite seconde classe (23) définit des premières propriétés relatives à la gestion des transactions entre un gérant de données et le système d'information et des secondes propriétés relatives à la récupération, la manipulation, et la sauvegarde de telles données par le système d'information depuis et vers un gérant de données.

# FIG. 1

```
                        ┌──────────────────────┐
                        │     UTILISATEUR      │──── 9
                        └──────────────────────┘
                                   │
                                   ▼
1 ───  ┌ ─ ─ ─ ─ ─ ─ ─ ─ ─ ─ ─ ─ ─ ─ ─ ─ ─ ─ ─ ─ ┐
       │ ┌ ─ ─ ─ ─ ─ ─ ─ ─ ─ ─ ─ ─ ─ ─ ─ ─ ─ ─ ┐ │
10 ──  │ │ ┌──────────────────┐  ┌──────────────────┐ │ │
100 ─  │ │ │SAISIE DES REQUETES│  │AFFICHAGE RESULTATS│ │ │─── 101
       │ │ └──────────────────┘  └──────────────────┘ │ │
       │ │              INTERFACE                 │ │
       │ └ ─ ─ ─ ─ ─ ─ ─ ─ ─ ─ ─ ─ ─ ─ ─ ─ ─ ─ ┘ │
       │                    ▲                      │
       │                    ▼                      │
       │ ┌ ─ ─ ─ ─ ─ ─ ─ ─ ─ ─ ─ ─ ─ ─ ─ ─ ─ ─ ┐ │
       │ │ ┌──────────────────────────────────┐ │ │
       │ │ │  ANALYSEUR LEXICAL ET SYNTAXIQUE │ │ │─── 110
       │ │ └──────────────────────────────────┘ │ │
11 ──  │ │                                       │ │
112 ─  │ │ ┌──────────────┐  ┌──────────────────┐│ │─── 111
       │ │ │  INTERPRETE  │  │GENERATEUR DE PLAN ││ │
       │ │ └──────────────┘  └──────────────────┘│ │
       │ │              EVALUATEUR               │ │
       │ └ ─ ─ ─ ─ ─ ─ ─ ─ ─ ─ ─ ─ ─ ─ ─ ─ ─ ─ ┘ │
       │                    ▲                      │
       │                    ▼                      │
       │ ┌ ─ ─ ─ ─ ─ ─ ─ ─ ─ ─ ─ ─ ─ ─ ─ ─ ─ ─ ┐ │
120 ─  │ │ ┌──────────────────┐ ┌──────────────────┐│ │─── 123
       │ │ │GESTIONNAIRE IDENT.│ │GESTIONNAIRE RESSOUR.││ │
12 ──  │ │ └──────────────────┘ └──────────────────┘│ │
121 ─  │ │ ┌──────────────────┐ ┌──────────────────┐│ │─── 124
       │ │ │GESTIONNAIRE OBJETS│ │GESTIONNAIRE COM. ││ │
       │ │ └──────────────────┘ └──────────────────┘│ │
122 ─  │ │ ┌──────────────────┐ ┌──────────────────┐│ │─── 125
       │ │ │GESTIONNAIRE DIC. │ │GESTIONNAIRE TRANS.││ │
       │ │ └──────────────────┘ └──────────────────┘│ │
       │ │                NOYAU                  │ │
       │ └ ─ ─ ─ ─ ─ ─ ─ ─ ─ ─ ─ ─ ─ ─ ─ ─ ─ ─ ┘ │
       └ ─ ─ ─ ─ ─ ─ ─ ─ ─ ─ ─ ─ ─ ─ ─ ─ ─ ─ ─ ─ ┘
                            │
         ┌──────────────────┼──────────────────┐
         ▼                  ▼                  ▼
      ┌─────┐            ┌─────┐            ┌─────┐
2 ──  │ SIG │    3 ──    │SGBDR│    4 ──    │ VD  │
      └─────┘            └─────┘            └─────┘
```

# FIG.2

```
                        CLASS ─────── 21
                                          ┐
   22 ──── PROPERTY                        │
                                           │ ON
   23 ──── RESOURCE                        │
                                           │
   24 ──── LIBRARY                         │
                                           │
   25 ──── DATAMANAGER ◄── ─ ─ ─ ─ ─ ─ ─ ─ ┘

                                    SET ──── 260
                   COLLECTION
                                    LIST ──── 261
                     26

                                    FLOAT ──── 270

                                    STRING ──── 271
                   ABSTRACT
                                    DATE ──── 272
                     27
                                    INTEGER ──── 273

   OBJECT ── 20

                   BOOLEEN
                     28

                                    FILE DATA ──── 290

                   DOCUMENT
                                    FILM ──── 291
                     29
                                    DIAGRAM ──── 292

                    30              REGION ──── 300

                   GEO OBJECT       LINE ──── 301

                                    POINT ──── 302
                    31

                   PRESENTATION
```

**Office européen des brevets**

# RAPPORT DE RECHERCHE EUROPEENNE

Numero de la demande

EP 93 40 2924

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | IEEE COMPUTER SOCIETY OFFICE AUTOMATION SYMPOSIUM, 29 Avril 1987, GAITHERSBURG, MD, US. pages 36 - 45 Y. MASUNAGA 'Multimedia databases: A formal framework' * page 42, colonne 2, ligne 29 - page 44, colonne 1, ligne 15 * | 1-2 | G06F15/403 |
| Y | EP-A-0 408 812 (HEWLETT-PACKARD COMPANY) 23 Janvier 1991 * le document en entier * | 1-2 | |
| A | IEEE MICRO, vol.7, no.2, Avril 1987, NEW YORK US pages 53 - 65 K. SAKAMURA 'BTRON: The business-oriented operating system' * le document en entier * | 1 | |
| A | COMPUTER, vol.24, no.10, Octobre 1991, LONG BEACH US pages 42 - 50 T.D.C. LITTLE ET AL. 'Spatio-temporal composition of distributed multimedia objects for value-added networks' * le document en entier * | 1 | DOMAINES TECHNIQUES RECHERCHES (Int.Cl.5) G06F |

Le présent rapport a été établi pour toutes les revendications

| Lieu de la recherche | Date d'achèvement de la recherche | Examinateur |
|---|---|---|
| LA HAYE | 8 Février 1994 | KATERBAU, R |